# EUROPÄISCHE PATENTSCHRIFT

(11) **EP 2 014 409 B1**
(45) Veröffentlichungstag und Bekanntmachung des Hinweises auf die Patenterteilung: **11.03.2009**
(21) Anmeldenummer: 07020864.0
(22) Anmeldetag: 24.10.2007
(51) Int. Cl.: B23Q 1/54, B23Q 1/70, B23Q 5/10

(54) **Mehrachsen-Drehkopf mit integrierter Steuereinrichtung und Koordinatenmessmaschine mit solch einem Mehrachsen-Drehkopf**
Multi-axis swivel head with integrated controller and coordinate measuring machine with such a multi-axis swivel head
Tête rotative à plusieurs axes dotée d'un dispositif de commande intégré et machine de mesure de coordonnées dotée d'une telle tête rotative à plusieurs axes

(43) Veröffentlichungstag der Anmeldung: 14.01.2009
(73) Patentinhaber: WENZEL Präzision GmbH, 97859 Wiesthal (DE)
(72) Erfinder: Reyer, Thomas, 73765 Neuhausen (DE); Ludwig, Josef, 37154 Northeim (DE)
(74) Vertreter: Weber-Bruls, Dorothée

(56) Entgegenhaltungen:
- EP-A- 0 587 941
- EP-A- 1 038 630
- WO-A-02/26438
- US-A- 5 915 898

## Beschreibung

Die vorliegende. Erfindung betrifft einen Mehrachsen-Drehkopf mit einer Verbindungseinrichtung zum Anschließen an eine Maschine, insbesondere an eine Koordinatenmeßmaschine, einer Halteeinrichtung, die um eine erste Achse über eine erste Motoreinrichtung drehbar gelagert ist und in Wirkverbindung mit der Verbindungseinrichtung steht, einer Trageeinrichtung, die um eine zweite Achse über eine zweite Motoreinrichtung drehbar gelagert ist und in Wirkverbindung mit der Halteeinrichtung steht, und einer Spindel, die um eine dritte Achse über eine dritte Motoreinrichtung drehbar gelagert ist und in Wirkverbindung mit der Trageeinrichtung steht; und eine Koordinatenmeßmaschine mit solch einem Mehrachsen-Drehkopf.

Solch ein Mehrachsen-Drehkopf ist insbesondere aus der EP 0 885 081 B1 bekannt. Dort ist ein getriebeloser Arbeitsspindelkopf für eine Fräsmaschine, die mit Motoren zum direkten Antrieb und zur Steuerung der Drehung einer Spindel sowie des Spindelkopfs um mehrere Achsen ausgestattet ist, beschrieben.

Ein weiterer gattungsgemäßer Mehrachsen-Drehkopf ist aus der WO 02/26438 A2 bekannt. Genauer gesagt ist dort ein getriebeloser integrierter Spindelantrieb zum Antrieb und zur Positionierung einer Hauptspindel mit zwei angetriebenen Schwenkachsen, die direkt über jeweils zugeordnete hochpolige permanen magneterregte Synchronmotoren antreibbar sind, beschrieben, wobei der jeweilige permanentmagneterregte Läufer in die jeweilige Schwenkachse integriert ist.

Im Stand der Technik ist es ferner bekannt, einen Mehrachsen-Drehkopf mit einer Fluideinheit integriert auszustatten, siehe bspw. die DE 10 2006 005 762 A1.

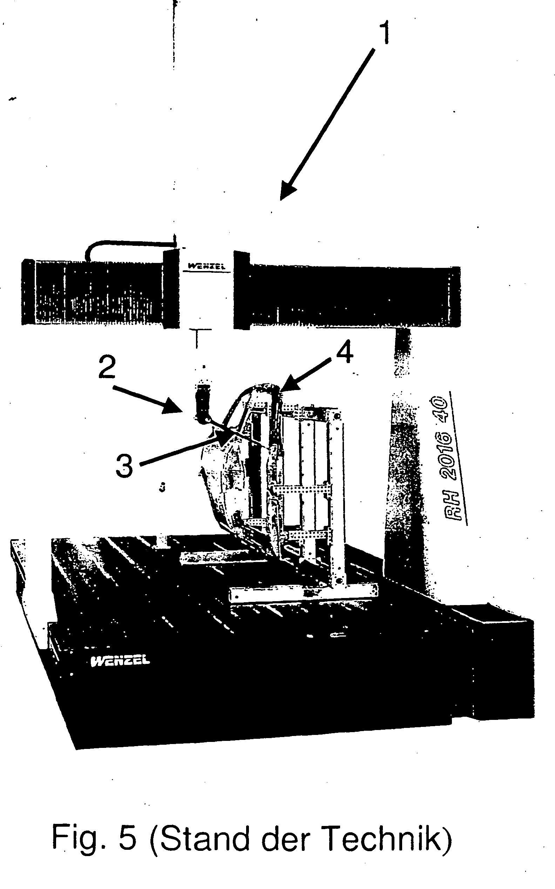

Mehrachsen-Drehköpfe können auch im Zusammenhang mit Koordinatenmeßmaschinen zum Einsatz kommen. Eine bekannte Koordinatenmeßmaschine der Anmelderin ist in Figur 5 mit dem Bezugszeichen 1 gekennzeichnet. Sie umfaßt ihrerseits insbesondere einen Dreh-/Schwenkkopf 2 mit einem Taster 3 zur Bestimmung von geometrischen Daten eines Objektes 4 in allen drei Raumdimensionen.

Aufgabe der vorliegenden Erfindung ist es, den gattungsgemäßen Mehrachsen-Drehkopf derart weiterzuentwickeln, daß er eine elektrische und mechanische Schnittstelle zur einfachen Verbindung mit einer Maschine, wie einer Werkzeugmaschine und/oder Koordinatenmeßmaschine, ermöglicht, wobei eine Steuereinrichtung für die erste, zweite und dritte Motoreinrichtung in dem Mehrachsen-Drehkopf integriert ist.

Dabei ist vorgesehen, daß die Steuereinrichtung eine erste Steuerkarte für die erste Motoreinrichtung, eine zweite Steuerkarte für die zweite Motoreinrichtung und eine dritte Steuerkarte für die dritte Motoreinrichtung umfaßt.

Mit der Erfindung wird dabei wiederum vorgeschlagen, daß die erste und zweite Steuerkarte, insbesondere miteinander verbunden, vorzugsweise aufeinander gestapelt, in der Halteeinrichtung angeordnet sind, und/oder die dritte Steuerkarte in der Trageeinrichtung angeordnet ist.

Ferner kann erfindungsgemäß vorgesehen sein, daß die erste, zweite und/oder dritte Motoreinrichtung, vorzugsweise die erste und zweite Motoreinrichtung, jeweils einen, insbesondere bürstenlosen, Motor, vorzugsweise in Form eines Servomotors, ein Getriebe, vorzugsweise in Form eines Taumelradgetriebes, und einen Encoder umfaßt, insbesondere durch ein Harmonic-Drive-Getriebe bereitgestellt.

Auch wird vorgeschlagen, daß die erste, zweite und/oder dritte Motoreinrichtung, vorzugsweise die dritte Motoreinrichtung, einen, insbesondere bürstenlosen, Motor, einen Zahnriemen und eine Zahmriemenscheibe umfaßt.

Bevorzugt ist erfindungsgemäß weiterhin, daß die erste, zweite und/oder dritte Motoreinrichtung, vorzugsweise die erste und zweite Motoreinrichtung, jeweils eine Motorwelle in Form einer Hohlwelle umfaßt, wobei durch jede Hohlwelle mindestens ein Kabel zumindest teilweise, insbesondere zur Steuereinrichtung, vorzugsweise zur entsprechenden Steuerkarte, führbar ist.

Mehrachsen-Drehköpfe der Erfindung können des weiteren dadurch gekennzeichnet sein, daß die Verbindungseinrichtung eine erste Komponente einer mechanischen und elektrischen Schnittstelle zwischen dem Mehrachsen-Drehkopf und der Maschine darstellt, wobei die erste Komponente vorzugsweise in Form einer Adapterplatte mit einer ersten integrierten Steckeinrichtung ausgebildet ist.

Dabei kann vorgesehen sein, daß die erste Steckeinrichtung zumindest einen ersten Stecker zur Übertragung von Signalen einer bi-direktionalen Kommunikation, zumindest einen zweiten Stecker zur Spannungsversorgung und zumindest ein drittes Steckglied für eine mechanische Steck- und/oder Rastverbindung umfaßt, wobei der erste Stecker insbesondere zusammen mit dem zweiten Stecker ausgeführt ist.

Ebenfalls vorgesehen sein kann, daß die Spindel mit zumindest einem Werkzeug, wie in Form eines Bohrers oder Fräsers, oder einem Taster verbindbar ist.

Vorgeschlagen werden erfindungsgemäß auch Ausführungsformen, die gekennzeichnet sind durch eine Wechseleinrichtung, die mit der Spindel verbindbar ist oder die Spindel umfaßt, um wahlweise ein Werkzeug, wie in Form eines Bohrers oder Fräsers, oder einen Taster an der Spindel zu führen, vorzugsweise im Bereich einer von der ersten und zweiten Achse bestimmten Halbkugel.

Dabei kann vorgesehen sein, daß die Wechseleinrichtung zumindest eine Spannzange umfaßt und/oder automatisiert ist.

Weitere Ausführungsformen eines erfindungsgemäßen Mehrachsen-Drehkopfes können gekennzeichnet sein durch eine berührungslose Sensiereinheit, insbesondere umfassend zumindest einen optischen Sensor, zum Einmessen eines Objekts, vorzugsweise bereitgestellt an der Trageeinrichtung.

Auch kann eine Anzeigeeinrichtung zum Anzeigen eines Betriebsstatus, wie Empfangsstatus, Kommunikationsstatus, Störstatus oder dergleichen, und/oder einer Betriebsart, wie Bohren, Fräsen, Tasten oder dergleichen, vorzugsweise umfassend eine Vielzahl von LEDs, vorgesehen sein.

Bevorzugt ist erfindungsgemäß ferner, daß die erste Achse senkrecht zur zweiten Achse steht, und die dritte Achse senkrecht zur zweiten Achse steht.

Eine spezielle Ausführungsform des erfindungsgemäßen Mehrachsen-Drehkopfes ist auch dadurch gekennzeichnet, daß die Halteeinrichtung im wesentlichen U-förmig im Querschnitt ausgebildet ist, und/oder die Trageeinrichtung im wesentlichen rechteckförmig im Querschnitt ausgebildet ist, wobei sich die Trageeinrichtung zwischen den Armen der U-Form der Halteeinrichtung beweglich erstreckt.

Dabei kann vorgesehen sein, daß die erste und zweite Steuerkarte in einem Arm der U-Form der Halteeinrichtung angeordnet sind, und/oder die erste Motoreinrichtung in der Verbindung zwischen den beiden Armen der U-Form der Halteeinrichtung angeordnet ist, und/oder die zweite Motoreinrichtung in dem anderen Arm der U-Form der Halteeinrichtung angeordnet ist.

Ferner wird bei besagter bevorzugten Ausführungsform vorgeschlagen, daß die dritte Steuerkarte, die Spindel und der Motor der dritten Motoreinrichtung übereinander in der Trageeinrichtung angeordnet sind, wobei vorzugsweise die Motorwelle und/oder zumindest ein Kabel der zweiten Motoreinrichtung sich zumindest teilweise zwischen der dritten Steuerkarte und der Spindel oder zwischen der Spindel und dem Motor der dritten Motoreinrichtung erstreckt.

Mit der Erfindung wird auch eine Koordinatenmeßmaschine mit einem erfindungsgemäßen Mehrachsen-Drehkopf geliefert, die eine zweite Komponente der mechanischen und elektrischen Schnittstelle, insbesondere in Form einer Stirnplatte mit einer zweiten integrierten Steckeinrichtung, umfaßt.

Dabei kann vorgesehen sein, daß die zweite Steckeinrichtung zumindest einen ersten Stecker zur Übertragung von Signalen einer bi-direktionalen Kommunikation, zumindest einen zweiten Stecker zur Spannungsversorgung und zumindest ein drittes Steckglied für eine mechanische Steck- und/oder Rastverbindung umfaßt, wobei der erste Stecker insbesondere zusammen mit dem zweiten Stecker ausgeführt ist.

Schließlich kann eine Ausführungsform einer erfindungsgemäßen Koordinatenmeßmaschine gekennzeichnet sein durch eine erste Bedieneinrichtung als Bestandteil der Koordinatenmeßmaschine und/oder eine zweite Bedieneinrichtung in Wirkverbindung mit der Koordinatenmeßmaschine, insbesondere über ein Intranet, das Internet, per Kabel oder per Funk, über die der Betrieb des Mehrachsen-Drehkopfs einstellbar ist.

Der Erfindung liegt die überraschende Erkenntnis zugrunde, daß durch Integration einer Steuereinrichtung in einen Mehrachsen-Drehkopf letzter mit einer ersten Komponente einer mechanischen und elektrischen Schnittstelle ausgestattet sein kann, die eine Verbindung mit einer Koordinatenmeßmaschine, die eine zweite Komponente besagter Schnittstelle aufweist, auf einfache Weise ermöglicht. Besagte Schnittstelle kann, bzw. beide Komponenten derselben können, selbst standardisiert ausgeformt sein, da die in den Mehrachsen-Drehkopf eingebaute Elektronik bauteilespezifische Parameter berücksichtigt, so daß über den elektronischen Teil der Schnittstelle nur eine bi-direktionale Kommunikation zu Koordinaten der Spitze eines Werkzeuges oder eines Tasters sowie eine Spannungsversorgung nötig sind. Es liegt also erfindungsgemäß erstmals ein intelligenter Mehrachsen-Drehkopf vor, der zum Fräsen, Bohren oder Messen genutzt werden kann, je nachdem, ob seine Spindel mit einem Werkzeug oder einem Taster verbunden ist.

Der erfindungsgemäße Mehrachsen-Drehkopf ermöglicht auch eine einfache Nachrüstbarkeit einer Werkzeugwechseleinrichtung und führt insgesamt zu einer Vergrößerung des Einsatzgebietes und somit erhöhten Flexibilität.

Weitere Merkmale und Vorteile der Erfindung ergeben sich aus der nachfolgenden Beschreibung, in der ein Ausführungsbeispiel der Erfindung anhand schematischer Zeichnungen im einzelnen erläutert ist. Dabei zeigt:
- Figur 1: eine perspektivische Ansicht eines erfindungsgemäßen Mehrachsen-Drehkopf in Form eines Fräskopfes;
- Figur 2: eine perspektivische Ansicht des Fräskopfes von Figur 1 mit zum Teil entfern- ten Abdeckungen;
- Figur 3: eine Draufsicht auf den Fräskopf von Figur 1 mit teilweise entfernten Teilen und in Teil-Explosions-Darstellung;
- Figur 4: eine andere perspektivische Ansicht des Fräskopfes von Figur 1; und
- Figur 5: eine perspektivische Ansicht einer bekannten Koordinatenmeßmaschine.

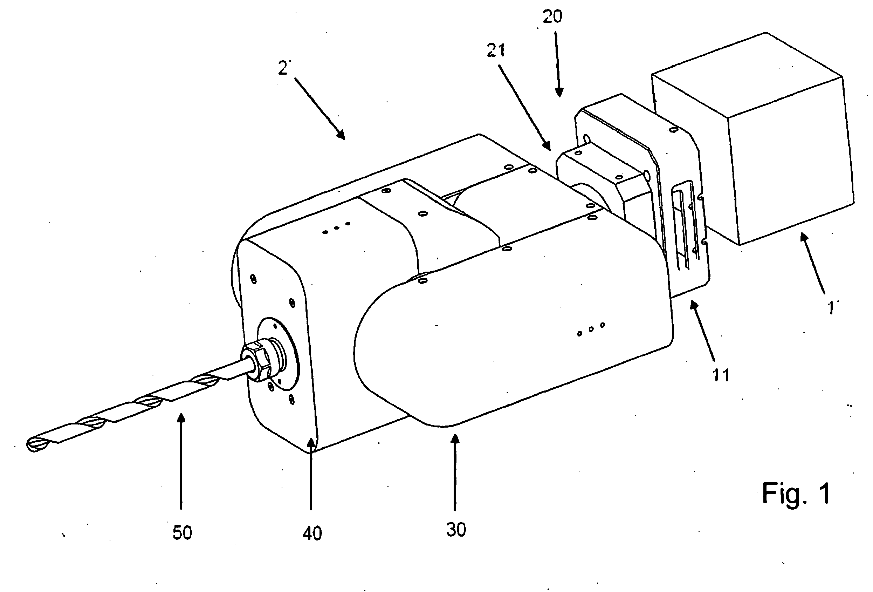

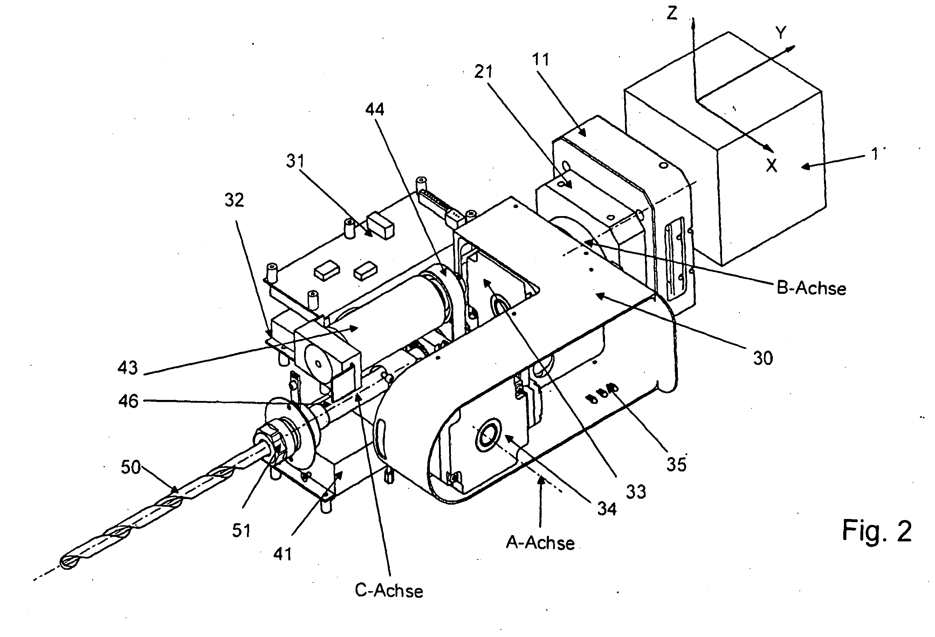

Wie Figur 1 zu entnehmen ist, umfaßt ein erfindungsgemäßer Mehrachsen-Drehkopf in Form eines Fräskopfes 2', der mit einer Koordinatenmeßmaschine 1 verbindbar ist, fünf Hauptkomponenten. Dabei handelt es sich um eine Verbindungseinrichtung 20 mit einer Adapterplatte 21, eine im Querschnitt im wesentlichen U-förmige Halteeinrichtung 30, die drehbar an der Adapterplatte 21 angebracht ist, eine Trageeinrichtung 40, die drehbar bzw. verschwenkbar zwischen den beiden Armen der U-Form der Halteeinrichtung 30 gelagert und im Querschnitt im wesentlichen rechteckförmig ausgeführt ist, und ein Werkzeug 50 in Form eines Bohrers oder Fräsers. Diese Hauptkomponenten werden im Anschluß mit Bezug auf die Figuren 2 bis 4 näher erläutert.

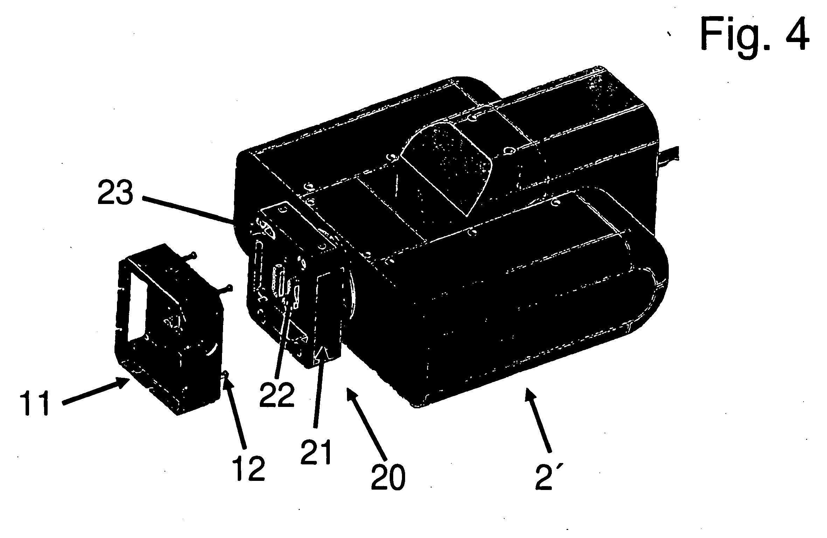

Insbesondere in Figur 4 ist die Adapterplatte 21 zu erkennen, die eine erste Komponente einer mechanischen und elektrischen Schnittstelle zwischen dem Fräskopf 2' und der Koordinatenmeßmaschine 1' darstellt. Zu diesem Zwecke umfaßt die Adapterplatte 21 zwei Stecker 22, wobei ein Stecker einer bi-direktionalen Kommunikation und der andere Stecker einer Spannungsversorgung dient. Zudem ist die Adapterplatte 21 mit vier Öffnungen 23 für eine Steck- und/oder Rastverbindung ausgeformt. Die Koordinatenmeßmaschine 1' weist als zweite Komponente der Schnittstelle eine Stirnplatte 11 auf, die ihrerseits zwei Stecker (nicht gezeigt) zur Kooperation mit den Steckern 22 und vier Bolzen 12 zur Kooperation mit den Öffnungen 23 aufweist.

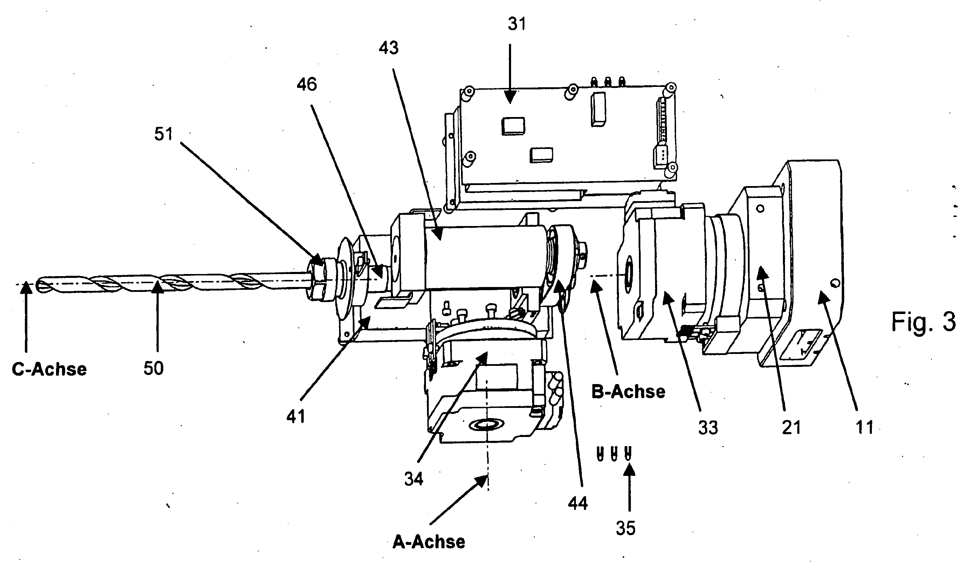

Die Halteeinrichtung 30 umfaßt, wie insbesondere den Figuren 2 und 3 zu entnehmen ist, eine erste Steuerkarte 31 zur Ansteuerung einer ersten Motoreinrichtung 33 und eine zweite Steuerkarte 32 zur Ansteuerung einer zweiten Motoreinrichtung 34 und drei LEDs 35 als Teil einer Anzeigeeinrichtung. Jede der Motoreinrichtungen 33, 34 ist dabei als Harmonic-Drive-Getriebe ausgeformt, umfassend ein Taumelradgetriebe mit integriertem AC-Motor und Encoder, wobei die jeweilige Motorwelle als Hohlwelle zum Durchführen von Kabeln zur jeweiligen Steuerkarte 31, 32 ausgebildet ist.

Die erste Motoreinrichtung 33 dient einer Drehung der Halteeinrichtung 30 um eine erste Achse, die in den Figuren 2 und 3 als B-Achse bezeichnet ist, während die zweite Motoreinrichtung 34 eine Drehung der Trageeinrichtung 40 um eine zweite Achse, die in den Figuren 2 und 3 als A-Achse bezeichnet ist, ermöglicht. Die zweite Achse steht senkrecht zu ersten Achse. Ferner ist darauf hinzuweisen, daß die Steuerkarten 31 und 32 raumsparend aufeinander gesteckt in einem Arm der U-Form der Halteeinrichtung 30 angeordnet sind, die zweite Motoreinrichtung 34 in dem anderen Arm bereitgestellt ist, während die erste Motoreinrichtung 33 in der Verbindung zwischen den beiden Armen angeordnet ist. Die LED's 35 sind an dem anderen Arm bereitgestellt.

Die Trageeinrichtung 40 umfaßt ihrerseits eine dritte Steuerkarte 41, eine dritte Motoreinrichtung 43 und eine Werkzeugspindel 46. Die dritte Motoreinrichtung 43 umfaßt ihrerseits einen bürstenlosen Motor sowie eine Zahnriemenscheibe mit Zahnriemen 44 zum Drehen der Werkzeugspindel 46 um eine dritte Achse, die in den Figuren 2 und 3 als C-Achse bezeichnet ist und senkrecht zur zweiten Achse verläuft. Die dritte Steuerkarte 41, die Werkzeugspindel 46 und der Motor sind übereinander angeordnet, wobei sich zwischen dem Motor und der Werkzeugspindel 46 die zweite Hohlwelle oder ein Kabel der zweiten Motoreinrichtung 34 zumindest teilweise erstreckt.

Das Werkzeug 50 ist über eine Spannzange 51 an die Trageeinrichtung 40 angebracht.

Der erfindungsgemäße intelligente Fräskopf 2' ist zum Fräsen von Modellen bei Installation an der Koordinatenmeßmaschine 1' geeignet. Gefräst werden können Modellbauwerkstoffe, wie z.B. Plastilium und PUR-Hartschäume. Ein Tastsystem zum Einmessen eines Modells ist an die Werkzeugspindel 46 adaptierbar, bspw. umfassend zumindest einen berührungslosen Sensor (nicht gezeigt) an der Trageeinrichtung oder einen Taster (nicht gezeigt) im Austausch zu dem Werkzeug 50. Der Fräskopf 2' kann sich in einem Raum um zwei Achsen (A- und B-Achse) so drehen, daß mit dem Werkzeug 50 oder Taster eine Halbkugel beschrieben werden kann.

### Bezugszeichenliste

- 1, 1': Koordinatenmeßmaschine
- 2: Dreh-/Schwenkkopf
- 2': Mehrachsen-Drehkopf
- 3: Taster
- 4: Objekt
- 11: Stirnplatte
- 12: Bolzen
- 20: Verbindungseinrichtung
- 21: Adapterplatte
- 22: Stecker
- 23: Öffnung
- 30: Halteeinrichtung
- 31: Steuerkarte 32 Steuerkarte
- 33: Motoreinrichtung
- 34: Motoreinrichtung
- 35: LED
- 40: Trageeinrichtung
- 41: Steuerkarte
- 43: Motoreinrichtung
- 44: Zahnriemenscheibe mit Zahnriemen
- 46: Werkzeugspindel
- 50: Werkzeug
- 51: Spannzange

## Patentansprüche

1. Mehrachsen-Drehkopf (2') mit
einer Verbindungseinrichtung (20) zum Anschließen an eine Maschine, insbesondere an eine Koordinatenmeßmaschine (1'),
einer Halteeinrichtung (30), die um eine erste Achse (B-Achse) über eine erste Motoreinrichtung (33) drehbar gelagert ist und in Wirkverbindung mit der Verbindungseinrichtung (20) steht,
einer Trageeinrichtung (40), die um eine zweite Achse (A-Achse) über eine zweite Motoreinrichtung (34) drehbar gelagert ist und in Wirkverbindung mit der Halteeinrichtung (30) steht, und
einer Spindel (46), die um eine dritte Achse (C-Achse) über eine dritte Motoreinrichtung (43) drehbar gelagert ist und in Wirkverbindung mit der Trageeinrichtung (40) steht,
**dadurch gekennzeichnet, daß**
eine Steuereinrichtung für die erste, zweite und dritte Motoreinrichtung (33, 34, 43) in dem Mehrachsen-Drehkopf (2') integriert ist, wobei die Steuereinrichtung eine erste Steuerkarte (31) für die erste Motoreinrichtung (33), eine zweite Steuerkarte (32) für die zweite Motoreinrichtung (34) und eine dritte Steuerkarte (41) für die dritte Motoreinrichtung (43) umfaßt.

2. Mehrachsen-Drehkopf nach Anspruch 1, **dadurch gekennzeichnet, daß**
die erste und zweite Steuerkarte (31, 32), insbesondere miteinander verbunden, vorzugsweise aufeinander gestapelt, in der Halteeinrichtung (30) angeordnet sind, und/oder
die dritte Steuerkarte (41) in der Trageeinrichtung (40) angeordnet ist.

3. Mehrachsen-Drehkopf nach einem der vorangehenden Ansprüche, **dadurch gekennzeichnet, daß**
die erste, zweite und/oder dritte Motoreinrichtung, vorzugsweise die erste und zweite Motoreinrichtung (33, 34), jeweils einen, insbesondere bürstenlosen, Motor, vorzugsweise in Form eines Servomotors, ein Getriebe, vorzugsweise in Form eines Taumelradgetriebes, und einen Encoder umfaßt, insbesondere durch ein Harmonic-Drive-Getriebe bereitgestellt.

4. Mehrachsen-Drehkopf nach einem der vorangehenden Ansprüche, **dadurch gekennzeichnet, daß**
die erste, zweite und/oder dritte Motoreinrichtung, vorzugsweise die dritte Motoreinrichtung (43), einen, insbesondere bürstenlosen, Motor, einen Zahnriemen (44) und eine Zahmriemenscheibe umfaßt.

5. Mehrachsen-Drehkopf nach einem der vorangehenden Ansprüche, **dadurch gekennzeichnet, daß**
die erste, zweite und/oder dritte Motoreinrichtung, vorzugsweise die erste und zweite Motoreinrichtung (33, 34), jeweils eine Motorwelle in Form einer Hohlwelle umfaßt, wobei durch jede Hohlwelle mindestens ein Kabel zumindest teilweise, insbesondere zur Steuereinrichtung, vorzugsweise zur entsprechenden Steuerkarte (31, 32), führbar ist.

6. Mehrachsen-Drehkopf nach einem der vorangehenden Ansprüche, **dadurch gekennzeichnet, daß**
die Verbindungseinrichtung (20) eine erste Komponente einer mechanischen und elektrischen Schnittstelle zwischen dem Mehrachsen-Drehkopf (2') und der Maschine (1') darstellt, wobei die erste Komponente vorzugsweise in Form einer Adapterplatte (21) mit einer ersten integrierten Steckeinrichtung (22, 23) ausgebildet ist.

7. Mehrachsen-Drehkopf nach Anspruch 6, **dadurch gekennzeichnet, daß**
die erste Steckeinrichtung zumindest einen ersten Stecker (22) zur Übertragung von Signalen einer bi-direktionalen Kommunikation, zumindest einen zweiten Stecker (22) zur Spannungsversorgung und zumindest ein drittes Steckglied (23) für eine mechanische Steck- und/oder Rastverbindung umfaßt, wobei der erste Stecker insbesondere zusammen mit dem zweiten Stecker ausgeführt ist.

8. Mehrachsen-Drehkopf nach einem der vorangehenden Ansprüche, **dadurch gekennzeichnet, daß**
die Spindel (46) mit zumindest einem Werkzeug (50), wie in Form eines Bohrers oder Fräsers, oder einem Taster verbindbar ist.

9. Mehrachsen-Drehkopf nach einem der vorangehenden Ansprüche, **gekennzeichnet durch**
eine Wechseleinrichtung (51), die mit der Spindel (46) verbindbar ist oder die Spindel umfaßt, um wahlweise ein Werkzeug (50), wie in Form eines Bohrers oder Fräsers, oder einen Taster an der Spindel (46) zu führen, vorzugsweise im Bereich einer von der ersten und zweiten Achse (A-Achse, B-Achse) bestimmten Halbkugel.

10. Mehrachsen-Drehkopf nach Anspruch 10, **dadurch gekennzeichnet, daß**
die Wechseleinrichtung zumindest eine Spannzange (51) umfaßt und/oder automatisiert ist.

11. Mehrachsen-Drehkopf nach einem der vorangehenden Ansprüche, **gekennzeichnet durch**
eine berührungslose Sensiereinheit, insbesondere umfassend zumindest einen optischen Sensor, zum Einmessen eines Objekts, vorzugsweise bereitgestellt an der Trageeinrichtung (40).

12. Mehrachsen-Drehkopf nach einem der vorangehenden Ansprüche, **gekennzeichnet durch**
eine Anzeigeeinrichtung zum Anzeigen eines Betriebsstatus, wie Empfangsstatus, Kommunikationsstatus, Störstatus oder dergleichen, und/oder einer Betriebsart, wie Bohren, Fräsen, Tasten oder dergleichen, vorzugsweise umfassend eine Vielzahl von LEDs (35).

13. Mehrachsen-Drehkopf nach einem der vorangehenden Ansprüche, **dadurch gekennzeichnet, daß**
die erste Achse (B-Achse) senkrecht zur zweiten Achse (A-Achse) steht, und die dritte Achse (C-Achse) senkrecht zur zweiten Achse (A-Achse) steht.

14. Mehrachsen-Drehkopf nach einem der vorangehenden Ansprüche, **dadurch gekennzeichnet, daß**
die Halteeinrichtung (30) im wesentlichen U-förmig im Querschnitt ausgebildet ist, und/oder die Trageeinrichtung (40) im wesentlichen rechteckförmig im Querschnitt ausgebildet ist, wobei sich die Trageeinrichtung zwischen den Armen der U-Form der Halteeinrichtung beweglich erstreckt.

15. Mehrachsen-Drehkopf nach Anspruch 14, **dadurch gekennzeichnet, daß**
die erste und zweite Steuerkarte (31, 32) in einem Arm der U-Form der Halteeinrichtung (30) angeordnet sind, und/oder die erste Motoreinrichtung (33) in der Verbindung zwischen den beiden Armen der U-Form der Halteeinrichtung (30) angeordnet ist, und/oder
die zweite Motoreinrichtung (34) in dem anderen Arm der U-Form der Halteeinrichtung (30) angeordnet ist.

16. Mehrachsen-Drehkopf nach Anspruch 14 oder 15, **dadurch gekennzeichnet, daß**
die dritte Steuerkarte (41), die Spindel (46) und der Motor der dritten Motoreinrichtung (43) übereinander in der Trageeinrichtung (40) angeordnet sind, wobei vorzugsweise die Motorwelle und/oder zumindest ein Kabel der zweiten Motoreinrichtung (34) sich zumindest teilweise zwischen der dritten Steuerkarte und der Spindel oder zwischen der Spindel (46) und dem Motor der dritten Motoreinrichtung (43) erstreckt.

17. Koordinatenmeßmaschine (1') mit einem Mehrachsen-Drehkopf (2') nach einem der vorangehenden Ansprüche, **gekennzeichnet durch**
eine zweite Komponente der mechanischen und elektrischen Schnittstelle, insbesondere in Form einer Stirnplatte (11) mit einer zweiten integrierten Steckeinrichtung.

18. Koordinatenmeßmaschine nach Anspruch 17, **dadurch gekennzeichnet, daß**
die zweite Steckeinrichtung zumindest einen ersten Stecker zur Übertragung von Signalen einer bi-direktionalen Kommunikation, zumindest einen zweiten Stecker zur Spannungsversorgung und zumindest ein drittes Steckglied (12) für eine mechanische Steck- und/oder Rastverbindung umfaßt, wobei der erste Stecker insbesondere zusammen mit dem zweiten Stecker ausgeführt ist.

19. Koordinatenmeßmaschine nach Anspruch 17 oder 18, **gekennzeichnet durch** eine erste Bedieneinrichtung als Bestandteil der Koordinatenmeßmaschine und/oder eine zweite Bedieneinrichtung in Wirkverbindung mit der Koordinatenmeßmaschine, insbesondere über ein Intranet, das Internet, per Kabel oder per Funk, über die der Betrieb des Mehrachsen-Drehkopfs einstellbar ist.

## Claims

1. Multi-axis swivel head (2') comprising a connecting device (20) for connecting to a machine, in particular to a coordinate measuring machine (1'),
a holding device (30), which is mounted such that it can be swivelled about a first axis (B axis) by means of a first motor device (33) and is in operative connection with the connecting device (20),
a supporting device (40), which is mounted such that it can be swivelled about a second axis (A axis) by means of a second motor device (34) and is in operative connection with the holding device (30), and
a spindle (46), which is mounted such that it can be swivelled about a third axis (C axis) by means of a third motor device (43) and is in operative connection with the supporting device (40),
**characterized in that**
a control device for the first, second and third motor devices (33, 34, 43) is integrated in the multi-axis swivel head (2'), the control device comprising a first control card (31) for the first motor device (33), a second control card (32) for the second motor device (34) and a third control card (41) for the third motor device (43).

2. Multi-axis swivel head according to Claim 1, **characterized in that** the first and second control cards (31, 32) are arranged in the holding device (30), in particular such that they are connected to each other, preferably stacked one above the other,
and/or
the third control card (41) is arranged in the supporting device (40).

3. Multi-axis swivel head according to one of the preceding claims, **characterized in that** the first, second and/or third motor devices, preferably the first and second motor devices (33, 34), respectively comprise a motor, in particular a brushless motor, preferably in the form of a servomotor, a gear mechanism, preferably in the form of a wobble wheel gear, and an encoder, in particular provided by a harmonic-drive gear mechanism.

4. Multi-axis swivel head according to one of the preceding claims, **characterized in that** the first, second and/or third motor device, preferably the third motor device (43) comprises a motor, in particular a brushless motor, a toothed belt (44) and a toothed belt pulley.

5. Multi-axis swivel head according to one of the preceding claims, **characterized in that** the first, second and/or third motor device, preferably the first and second motor devices (33, 34), respectively comprise a motor shaft in the form of a hollow shaft, it being possible for at least one cable to be led at least partially through each hollow shaft, in particular to the control device, preferably to the corresponding control card (31, 32).

6. Multi-axis swivel head according to one of the preceding claims, **characterized in that**
the connecting device (20) represents a first component of a mechanical and electrical interface between the multi-axis swivel head (2') and the machine (1'), the first component preferably taking the form of an adapter plate (21) with a first integrated plug-in device (22, 23).

7. Multi-axis swivel head according to Claim 6, **characterized in that**
the first plug-in device comprises at least a first plug (22) for the transmission of signals of a bidirectional communication, at least a second plug (22) for the voltage supply and at least a third plug-in element (23) for a mechanical plug-in and/or snap-in connection, the first plug being configured in particular together with the second plug.

8. Multi-axis swivel head according to one of the preceding claims, **characterized in that**
the spindle (46) can be connected to at least one tool (50), such as in the form of a drill or milling cutter, or a probe.

9. Multi-axis swivel head according to one of the preceding claims, **characterized by**
a changing device (51), which can be connected to the spindle (46) or comprises the spindle, in order, according to choice, to guide a tool (50), as in the form of a drill or a milling cutter, or a probe on the spindle (46), preferably in the region of a hemisphere defined by the first and second axes (A axis, B axis) .

10. Multi-axis swivel head according to Claim 9, **characterized in that** the changing device comprises at least one collet (51) and/or is automated.

11. Multi-axis swivel head according to one of the preceding claims, **characterized by**
a contactless sensing unit, in particular comprising at least one optical sensor, for calibrating an object, preferably provided on the supporting device (40).

12. Multi-axis swivel head according to one of the preceding claims, **characterized by**
an indicating device for indicating an operating status, such as reception status, communication status, fault status or the like, and/or an operating mode, such as drilling, milling, probing or the like, preferably comprising a multiplicity of LEDs (35).

13. Multi-axis swivel head according to one of the preceding claims, **characterized in that** the first axis (B axis) is perpendicular to the second axis (A axis), and the third axis (C axis) is perpendicular to the second axis (A axis).

14. Multi-axis swivel head according to one of the preceding claims, **characterized in that** the holding device (30) is formed in a substantially U-shaped manner in cross section, and/or the supporting device (40) is formed in a substantially rectangular manner in cross section, the supporting device extending movably between the arms of the U shape of the holding device.

15. Multi-axis swivel head according to Claim 14, **characterized in that** the first and second control cards (31, 32) are arranged in an arm of the U shape of the holding device (30), and/or the first motor device (33) is arranged in the connection between the two arms of the U shape of the holding device (30), and/or the second motor device (34) is arranged in the other arm of the U shape of the holding device (30).

16. Multi-axis swivel head according to Claim 14 or 15, **characterized in that**
the third control card (41), the spindle (46) and the motor of the third motor device (43) are arranged one above the other in the supporting device (40), the motor shaft and/or at least one cable of the second motor device (34) preferably extending at least partially between the third control card and the spindle or between the spindle (46) and the motor of the third motor device (43).

17. Coordinate measuring machine (1') comprising a multi-axis spindle head (2') according to one of the preceding claims, **characterized by** a second component of the mechanical and electrical interface, in particular in the form of an end plate (11) with a second integrated plug-in device.

18. Coordinate measuring machine according to Claim 17, **characterized in that** the second plug-in device comprises at least a first plug for the transmission of signals of a bidirectional communication, at least a second plug for the voltage supply and at least a third plug-in element (12) for a mechanical plug-in and/or snap-in connection, the first plug being configured in particular together with the second plug.

19. Coordinate measuring machine according to Claim 17 or 18, **characterized by**
a first operator control device as a component part of the coordinate measuring machine and/or a second operator control device in operative connection with the coordinate measuring machine, in particular via an intranet, the Internet, by cable or by radio, by means of which the operation of the multi-axis swivel head can be set.

## Revendications

1. Tête rotative multiaxe (2') comportant :
un dispositif de liaison (20) pour le raccordement à une machine, en particulier à une machine de mesure de coordonnées (1'),
un dispositif de retenue (30), qui est monté de manière rotative autour d'un premier axe (axe B) par l'intermédiaire d'un premier dispositif moteur (33) et est en liaison active avec le dispositif de liaison (20),
un dispositif de support (40), qui est monté de manière rotative autour d'un deuxième axe (axe A) par l'intermédiaire d'un deuxième dispositif moteur (34) et est en liaison active avec le dispositif de retenue (30), et
une broche (46), qui est montée de manière rotative autour d'un troisième axe (axe C) par l'intermédiaire d'un troisième dispositif moteur (43) et est en liaison active avec le dispositif de support (40),
**caractérisée en ce que**
un dispositif de commande pour les premier, deuxième et troisième dispositifs moteurs (33, 34, 43) est intégré dans la tête rotative multiaxe (2'),
le dispositif de commande comprenant une première carte de commande (31) pour le premier dispositif moteur (33), une deuxième carte de commande (32) pour le deuxième dispositif moteur (34) et une troisième carte de commande (41) pour le troisième dispositif moteur (43).

2. Tête rotative multiaxe selon la revendication 1, **caractérisée en ce que**
les première et deuxième cartes de commande (31, 32), en particulier reliées l'une à l'autre, de préférence empilées l'une sur l'autre, sont agencées dans le dispositif de retenue (30), et/ou
la troisième carte de commande (40) est agencée dans le dispositif de support (40).

3. Tête rotative multiaxe selon l'une quelconque des revendications précédentes, **caractérisée en ce que**
les premier, deuxième et/ou troisième dispositifs moteurs, de préférence les premier et deuxième dispositifs moteurs (33, 34), comportent respectivement un moteur, en particulier sans charbon, de préférence sous la forme d'un servomoteur, une transmission, en particulier sous la forme d'une transmission à roue oscillante, et un encodeur, alimenté en particulier par une transmission à démultiplication harmonique.

4. Tête rotative multiaxe selon l'une quelconque des revendications précédentes, **caractérisée en ce que**
les premier, deuxième ou troisième dispositifs moteurs, de préférence le troisième dispositif moteur (43), comporte un moteur, en particulier sans charbon, une courroie crantée (44) et un disque de courroie crantée.

5. Tête rotative multiaxe selon l'une quelconque des revendications précédentes, **caractérisée en ce que**
les premier, deuxième et/ou troisièmes dispositifs moteurs, de préférence les premier et deuxième dispositifs moteurs (33, 34), comportent respectivement un arbre moteur sous la forme d'un arbre creux, au moins un câble pouvant être guidé au moins partiellement à travers chaque arbre creux, en particulier jusqu'au dispositif de commande, de préférence jusqu'à la carte de commande (31, 32) correspondante.

6. Tête rotative multiaxe selon l'une quelconque des revendications précédentes, **caractérisée en ce que**
le dispositif de liaison (20) présente un premier composant d'une interface mécanique et électrique entre la tête rotatif multiaxe (2') et la machine (1'), le premier composant étant réalisé de préférence sous la forme d'une plaque formant adaptateur (21) comprenant un premier dispositif d'enfichage intégré (22, 23).

7. Tête rotative multiaxe selon la revendication 6, **caractérisée en ce que**
le premier dispositif d'enfichage comporte au moins une première fiche (22) pour la transmission de signaux d'une communication bidirectionnelle, au moins une deuxième fiche (22) pour l'alimentation en énergie électrique et au moins un troisième élément de fiche (23) pour une connexion mécanique par fiche et/ou par encliquetage, la première fiche étant réalisée en particulier en commun avec la deuxième fiche.

8. Tête rotative multiaxe selon l'une quelconque des revendications précédentes, **caractérisée en ce que**
la broche (46) peut être reliée à au moins un outil (50), ayant par exemple la forme d'un foret ou d'une fraise, ou à un palpeur.

9. Tête rotative multiaxe selon l'une quelconque des revendications précédentes, **caractérisée par**
un dispositif interchangeable (51), qui peut être relié à la broche (46) ou qui comporte la broche, pour guider de manière facultative un outil (50), ayant par exemple la forme d'un foret ou d'une fraise, ou un palpeur au niveau de la broche (46), de préférence dans le secteur d'un hémisphère déterminé par les premier et second axes (axe A, axe B).

10. Tête rotative multiaxe selon la revendication 10, **caractérisée en ce que**
le dispositif interchangeable comporte au moins une pince de serrage (51) et/ou est automatisé.

11. Tête rotative multiaxe selon l'une quelconque des revendications précédentes, **caractérisée par**
un ensemble de détection sans contact, comportant en particulier au moins un capteur optique, pour le calibrage d'un objet, de préférence disposé au niveau du dispositif de support (40).

12. Tête rotative multiaxe selon l'une quelconque des revendications précédentes, **caractérisée par**
un dispositif d'affichage pour l'affichage d'un statut de fonctionnement, comme un statut de réception, un statut de communication, un statut de panne ou similaire, et/ou d'un type de fonctionnement, comme le forage, le fraisage, l'examen ou similaire, comportant de préférence une pluralité de diodes électroluminescentes (35)

13. Tête rotative multiaxe selon l'une quelconque des revendications précédentes, **caractérisée en ce que**
le premier axe (axe B) est perpendiculaire au deuxième axe (axe A), et le troisième axe (axe C) est perpendiculaire au deuxième axe (axe A).

14. Tête rotative multiaxe selon l'une quelconque des revendications précédentes, **caractérisée en ce que**
le dispositif de retenue (30) est réalisé essentiellement en forme de U en coupe transversale, et/ou le dispositif de support (40) est réalisé essentiellement de manière rectangulaire en coupe transversale, le dispositif de support s'étendant de manière mobile entre les bras de la forme en U du dispositif de retenue.

15. Tête rotative multiaxe selon la revendication 14, **caractérisée en ce que**
les première et deuxième cartes de commande (31, 32) sont agencées dans un bras de la forme en U du dispositif de retenue (30), et/ou le premier dispositif moteur (33) est agencé dans la liaison entre les deux bras de la forme en U du dispositif de retenue (30), et/ou
le deuxième dispositif moteur (34) est agencé dans l'autre bras de la forme en U du dispositif de retenue (30).

16. Tête rotative multiaxe selon la revendication 14 ou 15, **caractérisée en ce que**
la troisième carte de commande (41), la broche (36) et le moteur du troisième dispositif moteur (43) sont agencés de manière superposée dans le dispositif de support (40), de préférence l'arbre moteur et/ou au moins un câble du deuxième dispositif moteur (34) s'étendant au moins partiellement entre la troisième carte de commande et la broche ou entre la broche (46) et le moteur du troisième dispositif moteur (43).

17. Machine de mesure de coordonnées (1') comprenant une tête rotative multiaxe (2') selon l'une quelconque des revendications précédentes, **caractérisée par**
un second composant de l'interface mécanique et électrique, en particulier sous la forme d'une plaque frontale (11) comprenant un second dispositif d'enfichage intégré.

18. Machine de mesure de coordonnées selon la revendication 17, **caractérisée en ce que**
le second dispositif d'enfichage comporte au moins une première fiche pour la transmission de signaux d'une communication bidirectionnelle, au moins une deuxième fiche pour l'alimentation en énergie électrique et au moins un troisième élément de fiche (12) pour une liaison mécanique par fiche et/ou par encliquetage, la première fiche étant réalisée en particulier en commun avec la deuxième fiche.

19. Machine de mesure de coordonnées selon la revendication 17 ou 18, **caractérisée par**
un premier dispositif de service faisant partie de la machine de mesure de coordonnées et/ou un second dispositif de service en liaison active avec la machine de mesure de coordonnées, en particulier par l'intermédiaire d'un intranet, de l'Internet, par câble ou par radio, par l'intermédiaire de laquelle le fonctionnement de la tête rotative multiaxe peut être ajusté.
